# EUROPEAN PATENT SPECIFICATION

(11) **EP 1 070 393 B1**
(45) Date of publication and mention of the grant of the patent: **03.01.2007**
(21) Application number: 99916520.2
(22) Date of filing: 08.04.1999
(51) Int. Cl.: H04B 1/38, H04L 5/16, H04B 3/54, H04M 1/72

(54) **DISTRIBUTION SYSTEM FOR EXTERNAL COMMUNICATION SIGNALS AND DATA**
DISTRIBUTIONSSYSTEM FÜR EXTERNE NACHRICHTENSIGNALE UND DATEN
SYSTEME DE DISTRIBUTION POUR SIGNAUX ET DONNEES DE COMMUNICATION EXTERNES

(30) Priority: 08.04.1998 US 58075
(43) Date of publication of application: 24.01.2001
(73) Proprietor: PHONEX CORPORATION, Midvale, UT 84047-3756 (US)
(72) Inventor: BULLOCK, Scott, R., South Jordan, UT 84095 (US); KNAB, John, M., Sandy, UT 84092 (US); BARTHOLOMEW, David, West Valley, UT 84120 (US)
(74) Representative: Altenburg, Udo
(86) International application number: PCT/US1999/007734
(87) International publication number: WO 1999/052220

(56) References cited:
- US-A- 5 319 634
- US-A- 5 903 835

## Description

### Background of the Invention

Field of the Invention. This invention relates to electronic communication systems for both data and voice signals. More specifically, the invention relates to the distribution of signals from a variety of sources, including conductor cable; satellite; PCS; Cellular (both AMPS and Digital); fiber optic cable; XDSLs; ISDN lines, to one or more in-building telephones, computers or other electronic devices using A/C power lines or wireless RF as a channel of communication.

Description of Related Art. A variety of power line and wireless telephone voice and/or data communication systems have been developed and are used to facilitate communication in locations where there is little or no availability of dedicated telephone/data wires. While these approaches may address some of the problems encountered in power line or wireless communications they typically do not address the issues associated with the distribution of signals to a variety of receivers which may be connected into the communication channel.

US 5 319 634 discloses a method and a system for conducting multiple access simultaneous telephone communications in full duplex either over the power lines of a building or using RF transmission. A base unit and extension units and a connecting link between the base unit and the extension units are provided.

### Summary of the Invention

It is desirable to provide a means for distributing communication signals between a variety of sources and a variety of destinations within buildings without requiring dedicated wired telephone lines, using such communication channels as A/C power lines or wireless RF. It is particularly desirable to provide a distribution system which is adapted to the unique requirements of A/C power line and wireless RF communication channels. Wireless and A/C power line communication systems provide many important advantages over wired telephone line systems. This is particularly the case where standard telephone jacks are limited or unavailable, or where multiple devices require communication over the same channel. Many of the advantages are discussed in further detail in the previously cited patent literature.

Accordingly, it is the primary object of this invention to provide a distribution system for the communication of signals and data which makes use of A/C power lines or wireless RF signals and which provides for the distribution of the signals and data to one or more of several destinations.

Another object of this invention is to provide a distribution system for the, communication of signals and data which provides a base unit which is connected to the incoming external signal sources.

Another object of this invention is to provide a distribution system for the communication of signals and data which provides an extension unit connected to telephone or electronic equipment for receiving signals from the A/C power line or wireless RF channel and sending signals across the A/C power line or wireless RF channel to the external communication equipment.

A further object of this invention is to provide a distribution system for the communication of signals across A/C power lines or wireless RF signals where error correction is performed to maintain data integrity.

A still further object of this invention is to provide a distribution system for the communication of signals across A/C power lines or wireless RF signals using a digital communications link.

It is still a further object of this invention to provide a distribution system for the communication of signals across A/C power lines or wireless RF signals using a modulation scheme in the family of Pulse Shift Key modulation.

It is a further object of this invention to provide a distribution system for the communication of signals across A/C power lines or wireless RF signals using data encoding for security of the signals between units.

It is still another object of this invention to provide a distribution system for the communication of signals across A/C power lines or wireless RF signals where the extension unit is provided with the means of connecting directly to a digital computer, an entertainment system and/or a telephone receiving digital information.

Additional objects, advantages, and other novel features of this invention will be set forth in part in the description that follows and in part will become apparent to those skilled in the art upon examination of the following or may be learned with the practice of the invention. The objects and advantages of this invention may be realized and attained hy means of the instrumentalities and combinations particularly pointed out in the appended claims. Still other objects or the present invention will become readily apparent to those skilled in the art from the following description wherein there is shown and described the preferred embodiment of this invention, simply by way of illustration of one of the modes best suited to carry out this invention. As it will be realized, this invention is capable of other different embodiments, and its several details, and specific electronic circuits, are capable of modification in various aspects without departing from the invention. Accordingly, the drawings and descriptions should be regarded as illustrative in nature and not as restrictive.

To achieve at least the primary object, the present invention provides a distribution system according to the independent claim 1. Preferred embodiments are described in the dependent claims.

### Brief Description of the Drawings

The accompanying drawings incorporated in and forming a part of the specification, illustrate a preferred embodiment of the present invention. Some, although not all, alternative embodiments are described in the following description. In the drawings:
Figure 1 is a top level block diagram showing the major sections of the invention.
Figure 2 is a block diagram showing the major component sections of the base unit of the invention.
Figure 3 is a block diagram showing the major component sections of the extension unit of the invention.
Reference will now be made in detail to the present preferred embodiment of the invention, an example of which is illustrated in the accompanying drawings.

### Detailed Description of the Invention

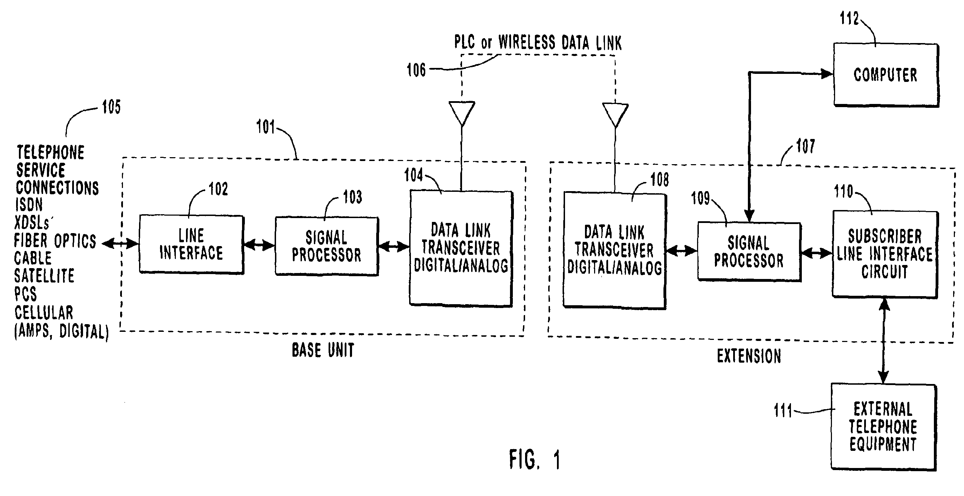

Figure 1 shows the top level distribution system of the preferred embodiment of the invention. The base unit 101 is shown having three major components: a line interface 102, a signal processor 103 and a data link transceiver 104. The extension unit 107 is shown having three major components: a data link transceiver 108, a signal processor 109 and a subscriber line interface circuit 110. The base unit 101 receives telephone type service connections 105 by connection to the line interface 102. The telephone type service connections 105 can be of a wide variety of types, including but not limited to: ISDN, XDSLs, fiber optic, cable, satellite, PCS and cellular. The line interface 102 is used to connect to the different kinds of signals encountered in the wide variety of telephone type service connections 105. These incoming signals can be digital, analog, packetized. The line interface 102 further provides the interface between the telephone type service connections 105 and the signal processor 103. The signal processor 103 processes the data resident in the signals received or to be sent to the telephone type service connections 105. Such processing includes: formatting and error correcting for the digital data. Furthermore, the signal processor 103 acts as the controller for the data link transceiver 104. The data link transceiver 104 performs the modulation/demodulation of the digital and/or analog data and both transmits and receives the data over the link 106 to the extension unit 107. The link 106, in the preferred embodiment is over the A/C powerlines, although, alternatively, the link 106 may be a wireless RF channel, that is through the airwaves. On the other side of the link 106 is the extension unit 107 data link transceiver 108, which performs the modulation/demodulation of the digital and/or analog data and both transmits and receives the data across the link 106 to the base unit 101 data link transceiver 104. Connected to the data link transceiver 108 is the signal processor 109 of the extension unit 107. Similar to the signal processor 103 of the base unit 101, this signal processor 109 formats the data, provides the error correction function and controls the data link transceiver 108. However, unlike the signal processor 103 of the base unit 101, this signal processor 109 is provided with a direct connection to a digital computer device 112 and this signal processor 109 is connect to a subscriber line interface circuit (SLIC) 110 which in turn provides the interface to external telephone equipment 111. This preferred embodiment of the invention makes use of standard electrical components and is adapted to work with standard telephone equipment and telephone service connections. Alternatively, special purpose electronic devices could be substituted and foreign or custom telephone equipment and/or connections could be supported without departing from the concept of this invention.

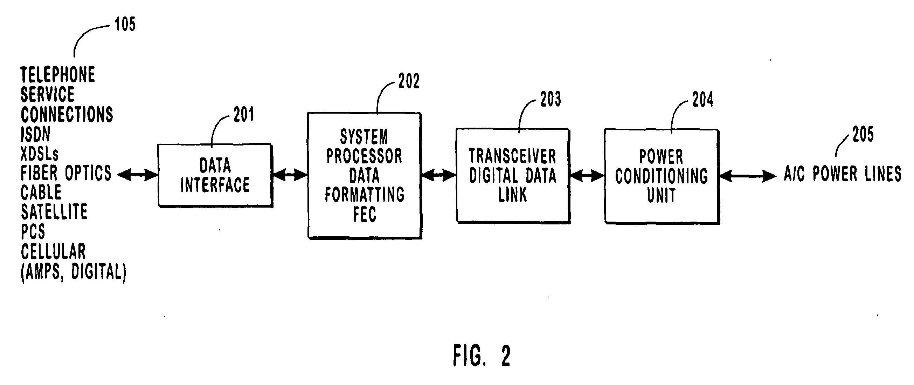

Figure 2 shows component sections of the base unit of the preferred embodiment of the invention. A preferred embodiment of the invention, using the A/C power line link 106 having the base unit 101 viewed in terms of the functional blocks is shown here. Data is both received and sent through the data interface 201 to the external signals 105. The data interface 201 function conditions the data for use by the system processor 202. The system processor 202 performs the functions necessary to control the base unit 101, format the data, add error correction and is the central controller for the base unit 101. Electrically connected to the system processor 202, the transceiver 203 provides the data link modulation and demodulation as well as providing the carrier signal for data transmission and reception. In the case of the A/C power line link 106, a power conditioning unit 204 is provided to interface data signals on to the A/C power line 205. Data that is provided to the SLIC in a standard wired telephone system, in this invention is transmitted to and from the power lines 205 (or alternatively a wireless RF channel) using a digital communications system. The preferred modulation scheme for the use across the link 106 is OQPSK, since this modulation scheme has good spectral efficiency and is cost effective for both modulation and demodulation. Alternative modulation schemes can be substituted without departing from the concept of this invention. Typically, in this preferred power line link embodiment , the base unit 101 receives digital data from the telephone service connection s 105, from a cable or other connection means, encodes the data, adds forward error correction to reduce data errors and to ensure reliable data communications, adds data scrambling for security between units and sends this processed data over the power line to the extension units 107.

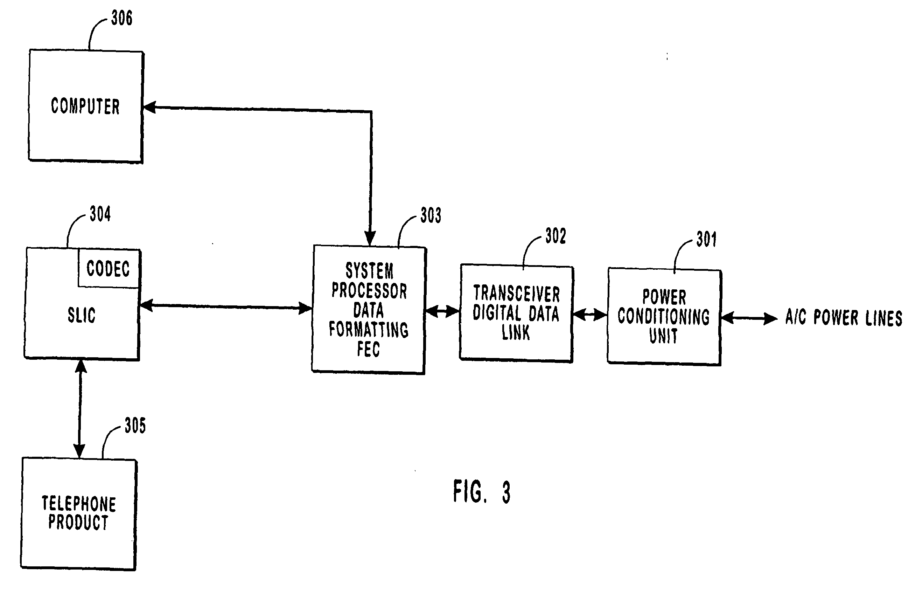

Figure 3 shows the component sections of the extension unit of the preferred embodiment of the invention. A preferred embodiment of the extension unit 107 of the invention, using the A/C power line link 106 , viewed in terms of the functional blocks is shown here. In this embodiment of the extension unit 107 a power supply and conditioning unit 301 provides both the interface to the power line link 106 and the electrical power for the extension unit 107. Communicating with the power supply and conditioning unit 301 is a transceiver 302, which in the preferred embodiment is a digital PLC transceiver. This transceiver 302 performs essentially the same function as described above concerning the base unit 101 transceiver 203, that is, it modulates and demodulates, transmits and receives the signal and is controlled by the system processor 303. The system processor 303 controls the function of the extension unit 107, as well as formatting the data and providing the forward error correction for the extension unit. 107. This system processor 303 also is provided with a direct connection to a digital computer device 306, bypassing the subscriber line interface circuit 304. A subscriber line interface circuit 304 is electrically connected to the system processor 303 to provide the interface to the external telephone type devices 305. The subscriber line interface circuit 304 includes a codec. The preferred extension unit, using an A/C power line link 106 is provided with pass-through power connectors to filter out unwanted interference in the extension unit 107.

## Claims

1. A distribution system for communication of signals and data over a communication link, wherein the communication link is one of a power line carrier communication channel and a wireless RF communication channel, said distribution system comprising:
(A) at least one base unit (101), wherein said base unit (101) comprises:
a service connection (105) selected from the group consisting of XDSL, fiber optics, cable, satellite, PCS, and cellular, and
a line interface (102) adapted to send and receive signals from a variety of telephone service connections (105); and
(B) at least one extension unit (107), wherein said communication link connects said at least one base unit (101) to said at least one extension unit.

2. The distribution system for communication of signals and data as recited in claim 1, herein said variety of telephone service connections (105) is selected from the group consisting of ISDN, XDSL, fiber optics, cable, satellite, PCS and cellular.

3. The distribution system for communication of signals and data as recited in claim 1, wherein said base unit (101) further comprises a signal processor (103) for controlling said base unit (101).

4. The distribution system for communication of signals and data as recited in claim 3, wherein said signal processor (103) formats the data.

5. The distribution system for communication of signals and data as recited in claim 3, wherein said signal processor (103) performs error correction.

6. The distribution system for communication of signals and data as recited in claim 1, wherein said base unit (101) further comprises a transceiver (104) for providing modulation of the signals.

7. The distribution system for communication of signals and data as recited in claim 1, wherein said base unit (101) further comprises a transceiver (104) for demodulating the signals.

8. The distribution system for communication of signals and data as recited in claim 1, wherein said base unit (101) further comprises a transceiver (104) for sending and receiving the signals.

9. The distribution system for communication of signals and data as recited in claim 1, wherein said base unit (101) further comprises a transceiver (104) using a PSK modulation scheme.

10. The distribution system for communication of signals and data as recited in claim 1, wherein said base unit (101) further comprises a transceiver (104) using a frequency hop modulation scheme.

11. The distribution system for communication of signals and data as recited in claim 1, wherein said base unit (101) further comprises a power conditioning unit (204) to provide an electrical interface to an A/C power line (205).

12. The distribution system for communication of signals and data as recited in claim 1, wherein said extension unit (107) further comprises a power supply for providing electrical power to said extension unit (107).

13. The distribution system for communication of signals and data as recited in claim 1, wherein said extension unit (107) further comprises a power conditioning unit for interfacing said extension unit (107) with an A/C power line.

14. The distribution system for communication of signals and data as recited in claim 1, wherein said extension unit (107) further comprises a transceiver (108) for providing modulation of the signals.

15. The distribution system for communication of signals and data as recited in claim 1, wherein said extension unit (107) further comprises a transceiver (108) for demodulating the signals.

16. The distribution system for communication of signals and data as recited in claim 1, wherein said extension unit (107) further comprises a transceiver (108) for sending and receiving the signals.

17. The distribution system for communication of signals and data as recited in claim 1, wherein said extension unit (107) further comprises a transceiver (108) using a PSK modulation scheme.

18. The distribution system for communication of signals and data as recited in claim 1, wherein said extension unit (107) further comprises a transceiver (108) using a frequency hop modulation scheme.

19. The distribution system for communication of signals and data as recited in claim 1, wherein said extension unit (107) further comprises a signal processor (109) for controlling said extension unit (107).

20. The distribution system for communication of signals and data as recited in claim 4, wherein said signal processor (109) formats the data.

21. The distribution system for communication of signals and data as recited in claim 3, wherein said signal processor (109) performs error correction.

22. The distribution system for communication of signals and data as recited in claim 3, wherein said signal processor (109) interfaces with a digital electronic computer (112).

23. The distribution system for communication of signals and data as recited in claim 1, wherein said extension unit (107) further comprises a subscriber line interface circuit (110) having a codec and with the ability to connect electrically with standard telephone communications devices.

24. The distribution system for communication of signals and data as recited in claim 1, wherein said extension unit (107) further comprises a subscriber line interface circuit (110) having a codec and having the ability to connect electrically with a digital telephone.

25. The distribution system for communication of signals and data as recited in claim 1, wherein said extension unit (107) further comprises a subscriber line interface circuit (110) having a codec and having the ability to connect electrically with a digital television.

26. The distribution system for communication of signals and data as recited in claim 1, wherein said extension unit (107) further comprises a subscriber line interface circuit (110) having a codec and having the ability to connect electrically with a digital audio system.

27. The distribution system for communication of signals and data as recited in claim 1, wherein said extension unit (107) further comprises a subscriber line interface circuit (110) having a codec and having the ability to connect electrically with a digital tele-conferencing device.

## Patentansprüche

1. Verteilsystem für Kommunikation von Signalen und Daten über eine Kommunikationsverbindung, wobei die Kommunikationsverbindung zumindest eine von einem Stromleitungsträger-Kommunikationskanal und einem drahtlosen HF-Kommunikationskanal ist, wobei das Verteilsystem umfasst:
(A) zumindest eine Basiseinheit (101), wobei die Basiseinheit (101) umfasst:
eine Dienstverbindung (105), die ausgewählt ist aus der Gruppe bestehend aus XDSL, Faseroptik, Kabel, Satellit, PCS und Mobil, und
eine Anschlussschnittstelle (102), die angepasst ist zum Senden und Empfangen von Signalen von einer Vielzahl von Telefondienstverbindungen (105); und
(B) zumindest eine Erweiterungseinheit (107), wobei die Kommunikationsverbindung die zumindest eine Basiseinheit (101) mit der zumindest einen Erweiterungseinheit verbindet.

2. Verteilsystem für Kommunikation von Signalen und Daten nach Anspruch 1, wobei die Vielfalt von Telefondienstverbindungen (105) ausgewählt ist aus der Gruppe bestehend aus ISDN, XDSL, Faseroptik, Kabel, Satellit, PCS und Mobil.

3. Verteilsystem für Kommunikation von Signalen und Daten nach Anspruch 1, wobei die Basiseinheit (101) weiterhin einen Signalprozessor (103) zum Steuern der Basiseinheit (101) umfasst.

4. Verteilsystem für Kommunikation von Signalen und Daten nach Anspruch 3, wobei der Signalprozessor (103) die Daten formatiert.

5. Verteilsystem für Kommunikation von Signalen und Daten nach Anspruch 3, wobei der Signalprozessor (103) Fehlerkorrektur durchführt.

6. Verteilsystem für Kommunikation von Signalen und Daten nach Anspruch 1, wobei die Basiseinheit (101) weiterhin einen Transceiver (104) umfasst zum Bereitstellen von Modulation der Signale.

7. Verteilsystem für Kommunikation von Signalen und Daten nach Anspruch 1, wobei die Basiseinheit (101) weiter einen Transceiver (104) umfasst zum Demodulieren der Signale.

8. Verteilsystem für Kommunikation von Signalen und Daten nach Anspruch 1, wobei die Basiseinheit (101) weiter einen Transceiver (104) umfasst zum Senden und Empfangen der Signale.

9. Verteilsystem für Kommunikation von Signalen und Daten nach Anspruch 1, wobei die Basiseinheit (101) weiterhin einen Transceiver (104) umfasst, der ein PSK-Modulationsschema verwendet.

10. Verteilsystem für Kommunikation von Signalen und Daten nach Anspruch 1, wobei die Basiseinheit (101) weiterhin einen Transceiver (104) umfasst, der ein Frequenzsprung-Modulationsschema verwendet.

11. Verteilsystem für Kommunikation von Signalen und Daten nach Anspruch 1, wobei die Basiseinheit (101) weiterhin eine Stromkonditionierungseinheit (204) umfasst, um eine elektrische Schnittstelle bereitzustellen zu einer A/C-Stromleitung (205).

12. Verteilsystem für Kommunikation von Signalen und Daten nach Anspruch 1, wobei die Erweiterungseinheit (107) weiter eine Stromversorgung umfasst zum Bereitstellen elektrischer Leistung an die Erweiterungseinheit (107).

13. Verteilsystem für Kommunikation von Signalen und Daten nach Anspruch 1, wobei die Erweiterungseinheit (107) weiterhin eine Stromkonditionierungseinheit umfasst zum Koppeln der Erweiterungseinheit (107) an eine A/C-Stromleitung.

14. Verteilsystem für Kommunikation von Signalen und Daten nach Anspruch 1, wobei die Erweiterungseinheit (107) weiterhin einen Transceiver (108) umfasst zum Bereitstellen von Modulation der Signale.

15. Verteilsystem für Kommunikation von Signalen und Daten nach Anspruch 1, wobei die Erweiterungseinheit (107) weiterhin einen Transceiver (108) umfasst zum Demodulieren der Signale.

16. Verteilsystem für Kommunikation von Signalen und Daten nach Anspruch 1, wobei die Erweiterungseinheit (107) weiterhin einen Transceiver (108) umfasst zum Senden und empfangen der Signale.

17. Verteilsystem für Kommunikation von Signalen und Daten nach Anspruch 1, wobei die Erweiterungseinheit (107) weiterhin einen Transceiver (108) umfasst, der ein PSK-Modulationsschema verwendet.

18. Verteilsystem für Kommunikation von Signalen und Daten nach Anspruch 1, wobei die Erweiterungseinheit (107) weiterhin einen Transceiver (108) umfasst, der ein Frequenzsprung-Modulationsschema verwendet.

19. Verteilsystem für Kommunikation von Signalen und Daten nach Anspruch 1, wobei die Erweiterungseinheit (107) weiterhin einen Signalprozessor (109) umfasst zum Steuern der Erweiterungseinheit (107).

20. Verteilsystem für Kommunikation von Signalen und Daten nach Anspruch 4, wobei der Signalprozessor (109) die Daten formatiert.

21. Verteilsystem für Kommunikation von Signalen und Daten nach Anspruch 3, wobei der Signalprozessor (109) Fehlerkorrektur durchführt.

22. Verteilsystem für Kommunikation von Signalen und Daten nach Anspruch 3, wobei der Signalprozessor (109) an einen digitalen elektronischen Computer (112) ankoppelt.

23. Verteilsystem für Kommunikation von Signalen und Daten nach Anspruch 1, wobei die Erweiterungseinheit (107) weiterhin eine Teilnehmeranschlussleitungs-Schnittstellenschaltung (110) umfasst, die einen Codec aufweist und mit der Fähigkeit zum elektrischen Verbinden zu Standard-Telefonkommunikationsgeräten.

24. Verteilsystem für Kommunikation von Signalen und Daten nach Anspruch 1, wobei die Erweiterungseinheit (107) weiterhin eine Teilnehmeranschlussleitungs-Schnittstellenschaltung (110) umfasst, die einen Codec aufweist und die Fähigkeit hat zum elektrischen Verbinden zu einem digitalen Telefon.

25. Verteilsystem für Kommunikation von Signalen und Daten nach Anspruch 1, wobei die Erweiterungseinheit (107) weiterhin eine Teilnehmeranschlussleitungs-Schnittstellenschaltung (110) umfasst, die einen Codec aufweist und die Fähigkeit hat zum elektrischen Verbinden zu einem digitalen Fernsehen.

26. Verteilsystem für Kommunikation von Signalen und Daten nach Anspruch 1, wobei die Erweiterungseinheit (107) weiterhin eine Teilnehmeranschlussleitungs-Schnittstellenschaltung (110) umfasst, die einen Codec aufweist und die Fähigkeit zum elektrischen Verbinden zu einem digitalen Audiosystem hat.

27. Verteilsystem für Kommunikation von Signalen und Daten nach Anspruch 1, wobei die Erweiterungseinheit (107) weiterhin eine Teilnehmeranschlussleitungs-Schnittstellenschaltung (110) umfasst, die einen Codec aufweist und die Fähigkeit zum elektrischen Verbinden zu einem digitalen Telekonferenzgerät hat.

## Revendications

1. Système de distribution pour la communication de signaux et de données sur une liaison de communication, dans lequel la liaison de communication est au moins l'une d'une voie de communication à courant porteur sur ligne d'alimentation et d'une voie de communication HF sans fil, ledit système de distribution comprenant :
(A) au moins une unité de base (101), dans lequel ladite unité de base (101) comprend :
une connexion de service (105), sélectionnée à partir du groupe composé du XDSL, des fibres optiques, du câble, d'un satellite, du PCS et du téléphone cellulaire, et
une interface de ligne (102) propre à envoyer et à recevoir des signaux provenant de toute une variété de connexions de service téléphonique (105) ; et
(B) au moins une unité formant poste intérieur (107), dans lequel ladite liaison de communication relie ladite au moins une unité de base (101) à ladite au moins une unité formant poste intérieur.

2. Système de distribution pour la communication de signaux et de données selon la revendication 1, dans lequel ladite variété de connexions de service téléphonique (105) est sélectionnée à partir du groupe composé du RNIS, du XDSL, des fibres optiques, du câble, d'un satellite, du PCS et du téléphone cellulaire.

3. Système de distribution pour la communication de signaux et de données selon la revendication 1, dans lequel ladite unité de base (101) comprend en outre un processeur de signaux (103) pour commander ladite unité de base (101).

4. Système de distribution pour la communication de signaux et de données selon la revendication 3, dans lequel ledit processeur de signaux (103) formate les données.

5. Système de distribution pour la communication de signaux et de données selon la revendication 3, dans lequel ledit processeur de signaux (103) exécute une correction d'erreurs.

6. Système de distribution pour la communication de signaux et de données selon la revendication 1, dans lequel ladite unité de base (101) comprend en outre un émetteur-récepteur (104) pour assurer une modulation des signaux.

7. Système de distribution pour la communication de signaux et de données selon la revendication 1, dans lequel ladite unité de base (101) comprend en outre un émetteur-récepteur (104) pour démoduler les signaux.

8. Système de distribution pour la communication de signaux et de données selon la revendication 1, dans lequel ladite unité de base (101) comprend en outre un émetteur-récepteur (104) pour envoyer et recevoir les signaux.

9. Système de distribution pour la communication de signaux et de données selon la revendication 1, dans lequel ladite unité de base (101) comprend en outre un émetteur-récepteur (104), qui utilise un procédé de modulation PSK (par déplacement de phase).

10. Système de distribution pour la communication de signaux et de données selon la revendication 1, dans lequel ladite unité de base (101) comprend en outre un émetteur-récepteur (104), qui utilise un procédé de modulation à sauts de fréquence.

11. Système de distribution pour la communication de signaux et de données selon la revendication 1, dans lequel ladite unité de base (101) comprend en outre une unité de traitement d'énergie (204) pour constituer une interface électrique vers une ligne d'alimentation en courant alternatif (205).

12. Système de distribution pour la communication de signaux et de données selon la revendication 1, dans lequel ladite unité formant poste intérieur (107) comprend en outre une alimentation en énergie pour fournir de l'énergie électrique à ladite unité formant poste intérieur (107).

13. Système de distribution pour la communication de signaux et de données selon la revendication 1, dans lequel ladite unité formant poste intérieur (107) comprend en outre une unité de traitement d'énergie pour constituer une interface entre ladite unité formant poste intérieur (107) et une ligne d'alimentation en courant alternatif.

14. Système de distribution pour la communication de signaux et de données selon la revendication 1, dans lequel ladite unité formant poste intérieur (107) comprend en outre un émetteur-récepteur (108) pour assurer une modulation des signaux.

15. Système de distribution pour la communication de signaux et de données selon la revendication 1, dans lequel ladite unité formant poste intérieur (107) comprend en outre un émetteur-récepteur (108) pour démoduler les signaux.

16. Système de distribution pour la communication de signaux et de données selon la revendication 1, dans lequel ladite unité formant poste intérieur (107) comprend en outre un émetteur-récepteur (108) pour envoyer et recevoir les signaux.

17. Système de distribution pour la communication de signaux et de données selon la revendication 1, dans lequel ladite unité formant poste intérieur (107) comprend en outre un émetteur-récepteur (108), qui utilise un procédé de modulation PSK.

18. Système de distribution pour la communication de signaux et de données selon la revendication 1, dans lequel ladite unité formant poste intérieur (107) comprend en outre un émetteur-récepteur (108), qui utilise un procédé de modulation à sauts de fréquence.

19. Système de distribution pour la communication de signaux et de données selon la revendication 1, dans lequel ladite unité formant poste intérieur (107) comprend en outre un processeur de signaux (109) pour commander ladite unité formant poste intérieur (107).

20. Système de distribution pour la communication de signaux et de données selon la revendication 4, dans lequel ledit processeur de signaux (109) formate les données.

21. Système de distribution pour la communication de signaux et de données selon la revendication 3, dans lequel ledit processeur de signaux (109) exécute une correction d'erreurs.

22. Système de distribution pour la communication de signaux et de données selon la revendication 3, dans lequel ledit processeur de signaux (109) constitue une interface avec un ordinateur électronique numérique (112).

23. Système de distribution pour la communication de signaux et de données selon la revendication 1, dans lequel ladite unité formant poste intérieur (107) comprend en outre un circuit d'interface de ligne d'abonné (110) ayant un codec (codeur - décodeur), et la capacité de se relier électriquement à des dispositifs de liaisons téléphoniques ordinaires.

24. Système de distribution pour la communication de signaux et de données selon la revendication 1, dans lequel ladite unité formant poste intérieur (107) comprend en outre un circuit d'interface de ligne d'abonné (110) ayant un codec, et la capacité de se relier électriquement à un appareil téléphonique numérique.

25. Système de distribution pour la communication de signaux et de données selon la revendication 1, dans lequel ladite unité formant poste intérieur (107) comprend en outre un circuit d'interface de ligne d'abonné (110) ayant un codec, et la capacité de se relier électriquement à un poste de télévision numérique.

26. Système de distribution pour la communication de signaux et de données selon la revendication 1, dans lequel ladite unité formant poste intérieur (107) comprend en outre un circuit d'interface de ligne d'abonné (110) ayant un codec, et la capacité de se relier électriquement à un système audio numérique.

27. Système de distribution pour la communication de signaux et de données selon la revendication 1, dans lequel ladite unité formant poste intérieur (107) comprend en outre un circuit d'interface de ligne d'abonné (110) ayant un codec, et la capacité de se relier électriquement à un dispositif de téléconférence numérique.
